# EUROPÄISCHE PATENTANMELDUNG

(11) **EP 3 537 292 A1**
(43) Veröffentlichungstag der Anmeldung: **11.09.2019**
(21) Anmeldenummer: 18159913.5
(22) Anmeldetag: 05.03.2018
(51) Int. Cl.: G06F 9/451, G06F 3/14, H04L 29/08, G06F 3/0481

(54) **VERFAHREN ZUR ERWEITERUNG EINES DYNAMISCHEN FUNKTIONSUMFANGS VON EINEM COMPUTERSYSTEM AUF EIN MOBILES KOMMUNIKATIONSGERÄT**

(71) Anmelder: Siemens Schweiz AG, 8047 Zürich (CH)
(72) Erfinder: RIEDWEG, Dominik, 8400 Winterthur (CH)
(74) Vertreter: Maier, Daniel Oliver

(57) **Zusammenfassung**

Erfindungsgemäss wird ein Verfahren zur Erweiterung eines dynamischen Funktionsumfangs von einem Computersystem auf ein mobiles Kommunikationsgerät offenbart, umfassend die folgenden Verfahrensschritte:
a) Generieren einer grafischen Useroberfläche an dem Computersystem;
b) Dynamische Ausgabe von Inhalten an der grafischen Useroberfläche;
c) Codieren von den dynamischen Funktionsumfang bestimmenden Transferinformationen, die zusammen mit der dynamischen Ausgabe von Inhalten an der grafischen Useroberfläche ausgegeben werden;
d) Erfassen der ausgegebenen Transferinformationen mit dem mobilen Kommunikationsgerät;
e) Auswerten der erfassten Transferinformationen durch das mobile Kommunikationsgerät und Bestimmen des dynamischen Funktionsumfangs; und
f) Aktivieren des dynamischen Funktionsumfangs auf dem mobilen Kommunikationsgerät unter Verwendung von Zugangsinformationen zu dem Computersystem und/oder zu den dynamisch auf der grafischen Useroberfläche ausgegebenen Inhalten, wobei diese Zugangsinformationen in den Transferinformationen umfasst sind.

Auf diese Weise ist es möglich, dass ein dynamischer Funktionsumfang, wie z.B. die dynamische Anzeige von Bildschirminhalten und/oder die Bereitstellung einer Benutzeroberfläche, auf das mobile Kommunikationsgerät übertragen wird, wobei die Zugangsinformationen dem mobilen Kommunikationsgerät den Zugang zu den an der grafischen Useroberfläche ausgegebenen Inhalten und/oder der dort vorhandenen Benutzeroberfläche (Tastatur, Maus, Touch-Screen usw.) bereitstellt.

## Beschreibung

Die vorliegende Erfindung bezieht sich auf ein Verfahren zur Erweiterung eines dynamischen Funktionsumfangs von einem Computersystem auf ein mobiles Kommunikationsgerät.

In Leitsystemen von industriellen Anlagen und Verkehrsnetzwerken werden die Statusinformationen über den aktuellen Zustand der Anlage/des Verkehrsnetzwerkes häufig an Grossbildschirmwänden und/oder an einzelnen Arbeitsplätzen mit einer Vielzahl von Bildschirmen, wie z.B. ein Fahrdienstleiterarbeitsplatz, dargestellt. Diese Darstellungsmittel werden üblicherweise von einem Computer oder bei komplexeren Anwendung auch von einem Server-basierten Computersystemen unterstützt, die im Hintergrund die Daten der Anlage/des Verkehrsnetzwerks aufnehmen und analysieren sowie die Steuerungssoftware für die Anlage/das Verkehrsnetzwerk ausführen. Weiter stellt der Computer und/oder das Computersystem neben der Anzeige des Status im Umfang der grafischen Useroberfläche auch Dateneingabegeräte, wie Tastatur, Touch-Screens, Computermaus, bereit.

Gerade in komplexeren Leitsystemen besteht oft der Bedarf, dass zumindest Teile der angezeigten Inhalte für mehr als eine Person von (temporärem) Interesse sind. Aus diesem Grund wäre es daher wünschenswert, wenn diese Inhalte der weiteren Person auf einem separaten mobilen Kommunikationsgerät, wie z.B. Smart Phone, Tablet PC oder dergleichen, zur Verfügung gestellt werden könnten.

Ein derartiger Wechsel/Ausdehnung des Ausgabemediums für die angezeigten Inhalte auf weitere externe Geräte, wie Smart Phone, Tablet PC und dergleichen, wird durch eine System-seitig vorgenommene Verlinkung der Geräte vorgenommen, die dann mit Hilfe einer Kommunikation zwischen den Geräten oder via allfällig vorhandener Server den Wechsel/Ausdehnung der Anzeige auf das externe Gerät einleiten. Dieser Vorgang funktioniert aber nur dann reibungsfrei, solange die Geräte über eine gemeinsame Software verfügen, die diese Funktionalität steuert. Bespielhaft kann hier Spotify® genannt werden, wo die Tonausgabe von einem PC/Laptop auf ein Smart Phone verschoben werden kann.

Ebenso ist es schon bekannt QR-Codes einzusetzen, die von einem statischen Inhalt auf erweitere (dynamische) Informationen verweisen. Die QR-Codes werden typischerweise mit einem Smart Phone gescannt und als Verweis auf eine Webseite interpretiert. Diese QR-Codes werden auch bei sogenannten Screen-Transfers verwendet, die die Übertragung einer Internetseite im Webbrowser eines Geräts auf ein anderes Gerät bewerkstelligen.

Dennoch wäre es wünschenswert, wenn ein Verfahren bereit stünde, mit dem dynamische Inhalte von einem Ausgabegerät auf ein anderes externes Gerät übertragen werden könnten, ohne dass das externe Gerät in das Computersystem eingebettet und dort zugelassen ist.

Der vorliegenden Erfindung liegt daher die Aufgabe zugrunde, ein Verfahren zur Erweiterung eines dynamischen Funktionsumfangs von einem Computersystem auf ein mobiles Kommunikationsgerät anzugeben, bei dem die vorstehend genannten Nachteile überwunden werden können.

Diese Aufgabe wird erfindungsgemäss durch ein Verfahren zur Erweiterung eines dynamischen Funktionsumfangs von einem Computersystem auf ein mobiles Kommunikationsgerät gelöst, umfassend die folgenden Verfahrensschritte:
a) Generieren einer grafischen Useroberfläche an dem Computersystem;
b) Dynamische Ausgabe von Inhalten an der grafischen Useroberfläche;
c) Codieren von den dynamischen Funktionsumfang bestimmenden Transferinformationen, die zusammen mit der dynamischen Ausgabe von Inhalten an der grafischen Useroberfläche ausgegeben werden;
d) Erfassen der ausgegebenen Transferinformationen mit dem mobilen Kommunikationsgerät;
e) Auswerten der erfassten Transferinformationen durch das mobile Kommunikationsgerät und Bestimmen des dynamischen Funktionsumfangs; und
f) Aktivieren des dynamischen Funktionsumfangs auf dem mobilen Kommunikationsgerät unter Verwendung von Zugangsinformationen zu dem Computersystem und/oder zu den dynamisch auf der grafischen Useroberfläche ausgegebenen Inhalten, wobei diese Zugangsinformationen in den Transferinformationen umfasst sind.

Auf diese Weise ist es möglich, dass ein dynamischer Funktionsumfang, wie z.B. die dynamische Anzeige von Bildschirminhalten und/oder die Bereitstellung einer Benutzeroberfläche, auf das mobile Kommunikationsgerät übertragen wird, wobei die Zugangsinformationen dem mobilen Kommunikationsgerät den Zugang zu den an der grafischen Useroberfläche ausgegebenen Inhalten und/oder der dort vorhandenen Benutzeroberfläche (Tastatur, Maus, Touch-Screen usw.) bereitstellt.

In vorteilhafter Ausgestaltung der Erfindung kann der dynamische Funktionsumfang die Ausgabe zumindest von Teilen der an der grafischen Useroberfläche ausgegebenen Inhalte umfassen. Auf diese Weise können beispielsweise nur einzelne Frames auf dem mobilen Kommunikationsgerät ausgegeben werden. Ebenso ist es möglich wie oben schon angesprochen, dass der dynamische Funktionsumfang eine grafische Dateneingabeoberfläche generiert, mit der Dateneingaben in der grafischen Useroberfläche vorgenommen werden können. Auf diese Weise kann das mobile Kommunikationsgerät so auch als Dateneingabe-Tool für die grafische Useroberfläche verwendet werden.

In weiterer vorteilhafter Ausgestaltung der Erfindung kann die Zugangsinformationen Daten zum Zugriff auf einen Server des Computersystems umfassen. Somit kann das mobile Kommunikationsgerät auf den Server des Computersystems zugreifen, ohne auf dem Server zuvor als zugelassenes Gerät vermerkt worden zu sein, wodurch ein besonders einfacher Zugang auf den Server hergestellt wird.

Optional können die Zugangsinformationen auch Daten umfassen, die bestimmte Teile der in der grafischen Useroberfläche ausgegebenen Inhalte definieren.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden nachfolgend mit Bezug auf die anhängenden Zeichnungen näher erläutert. Dabei zeigen:
- Figur 1: eine Lupenbild eines Eisenbahnleitsystems mit einem gestörten Hauptsignal;
- Figur 2: das Lupenbild gemäss Figur 1 mit einem von einem Benutzer abgefragten dynamischen Code im Header; und
- Figur 3: eine vergrösserte Darstellung des gestörten Hauptsignals auf einem mobilen Gerät, welche von dem mobilen Gerät mittels des dynamischen Codes von dem Eisenbahnleitsystem abgerufen wurde, ohne dass sich das mobile Gerät in das Eisenbahnleitsystem systemweise einbinden musste.

Durch das Codieren eines dynamischen Codes in die dynamische Ausgabe (Inhalte, wie Ton, Bild usw.) an einer grafischen Benutzeroberfläche und eine entsprechende Lesefunktion auf einem mobilen Kommunikationsgerät kann das mobile Kommunikationsgerät auf den an der grafischen Benutzeroberfläche angezeigten dynamischen Inhalt verlinkt werden. Der dynamische Code (auch Transferinformationen genannt) wird dabei fortschreitend dynamisch an den aktuell dargestellten Inhalt angepasst. Eine Lesefunktion des mobilen Kommunikationsgeräts, wie z.B. die Kamera eines Smart Phones, scannt den dynamischen Code und kann die aktuelle Ausgabe übernehmen und/oder sich für eine erweiterte Aufgabe entsprechend in das die grafischen Benutzeroberfläche unterstützende Computersystem einbinden. Der dynamische Code kann dabei entweder für den Anwender sichtbar oder auch als unsichtbares Signal in die Ausgabe eingebettet werden. Ebenso ist es möglich den dynamischen Code beispielsweise drahtlos zum Beispiel als Bluetooth-Signal auszugeben.

Die dynamische Übernahme einer Ausgabe ohne die dynamische Kopplung der beiden Wiedergabegeräte ist dank der Codierung der dynamischen Inhalte in dem dynamischen Code möglich. Die für eine konkrete Anwendung benötigen Daten für den dynamischen Code können unterschiedlich sein. Beispielhaft wird hier eine nicht-abschliessende Liste von potentiellen Anwendungen wiedergegeben:
a) Es wäre möglich, dass zum Beispiel Apple bei jedem Fenster am Computer den dynamischen Code einblendet. Die Scannen dieses dynamischen Codes mit einem iPhone verbindet sich das iPhone mit dem Computersystem in einer Weise, dass das entsprechende Fenster zur Anzeige auf dem iPhone übernommen wird. Die benötigten Daten wären in diesem Kontext zum Beispiel die Verbindungsdaten (direkte Verbindung oder eine Verbindung über einen Server/Cloud), das Fenster und eventuell weitere Daten über den anzuzeigenden Inhalt.
b) YouTube, Netflix, Radio-, Fernsehsender oder auch Fernseher könnten Codes einblenden/ausstrahlen, sodass auch hier die Ausgabe auf weitere Geräte übernommen werden kann. Die benötigten Daten sind bei diesen Anwendungen leicht unterschiedlich, enthalten aber zum Beispiel die Art der Verbindung, den aktuellen Kanal/Stream oder Sender und unter Umständen auch den Zeitpunkt innerhalb der Weidergabe.
c) Eine Erweiterung der Ein- und Ausgabe eines Systems ist beispielsweise auch für ein Leitsystem einer industriellen Anlage oder ein Verkehrsleitsystem möglich. Hier könnten die Funktionalitäten der Dateneingabe anstelle von Maus und Tastatur durch ein mobiles Tablet wahrgenommen werden, indem das mobile Tablet dynamisch über den dynamischen Code hinzugefügt wird. Auch hier weisen die dynamischen Codes auf die Inhalte hin, die übernommen werden sollen. Ein Einloggen mit dem mobilen Tablet in das Betriebssystem des Leitsystems ist demnach auch hier nicht erforderlich. Die dynamischen Codes könnten sogar so gestaltet sein, dass die Rolle des Benutzers an der grafischen Benutzeroberfläche auf das mobile Tablet übernommen wird.
d) Bei einem Mobiltelefon/Smart Phone ist die Kamera als Scanner verwendbar, wobei die konkrete Ausgabe der Daten auf dem Bildschirm des Geräts an eine entsprechende App delegiert werden kann (ähnlich wie heute schon WhatsApp in andere Apps integriert wird, beispielsweise durch "custom URL schemes, share extension und durch eine Document Interaction API. Derartige Apps sind auch in der Lage Protokolle für das Streaming, RDP usw. zu unterstützen.

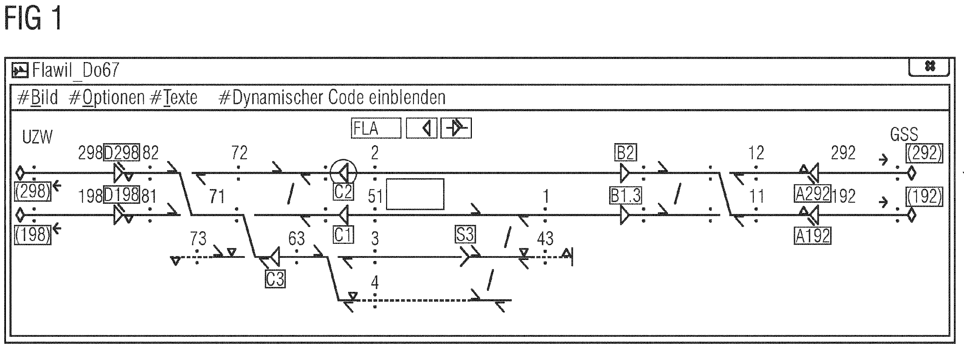

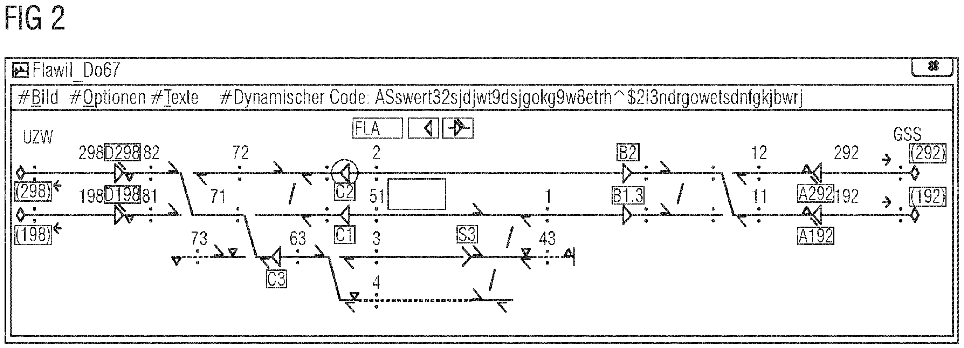

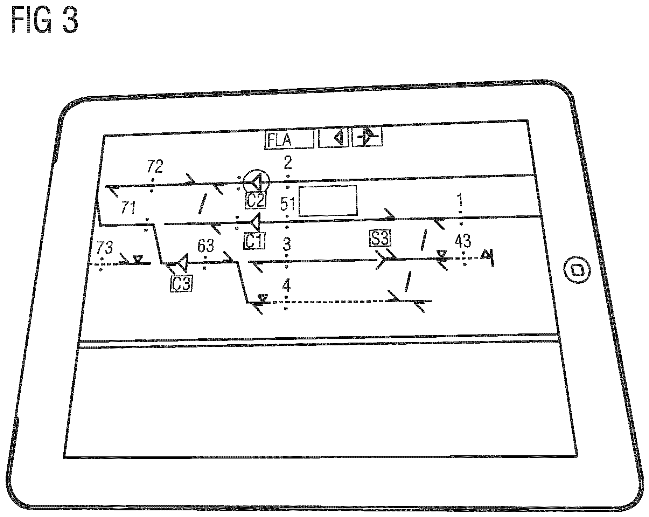

Die Bahnleittechnik Iltis N automatisiert den Bahnverkehr immer stärker, was zur Folge hat, dass immer weniger Benutzer (Fahrdienstleiter) für immer grössere Gebiete eingesetzt werden. Allerdings gibt es auch Fahrten, welche nicht zwangsläufig im Fahrplan geplant werden und daher manuell bedient werden müssen, zum Beispiel Rangierfahrten. Beim Auftreten von Störungen führt dies zu einer erheblichen Mehrbelastung, so dass er wünschenswert wäre, wenn die Störungsbehebung an einen Kollegen delegiert werden könnte (z. B. einen Spezialisten für den betroffenen Stellwerkstyp). Da die Störungsbehebung nicht zwangsläufig von einem Iltis N-Arbeitsplatz aus durchgeführt werden kann, würde das Fenster, welches das gestörte Stellwerk darstellt vom Spezialisten auf das mobile Gerät übernommen, unter Umständen auch nur mit eingeschränkten Rechten. Figur 1 beispielsweise das Lupenbild für eine Störung an einem Hauptsignal C2 in Flawil, Schweiz. In Figur 2 ist im Header der dynamische Code erkennbar, dessen Einblendung von dem Benutzer angefragt worden ist und so die Übernahme des Lupenbildes auf eine mobiles Gerät erlaubt (siehe Figur 3). Der dynamische Code ist hier beispielhaft als zufällige Zeichenfolge visualisiert.

Sobald die Übernahme vom Iltis N System festgestellt wurde oder nach Ablauf einer Frist (Timeout) kann der dynamische Code ausgeblendet werden, um einen Missbrauch zu verhindern.

Dadurch wäre der Spezialist in der Lage, vor Ort am Stellwerk, die Störungsbehebung durchzuführen und die Resultate direkt im betroffenen Iltis N-Fenster auf dem mobilen Gerät zu betrachtet.

## Patentansprüche

1. Verfahren zur Erweiterung eines dynamischen Funktionsumfangs von einem Computersystem auf ein mobiles Kommunikationsgerät, umfassend die folgenden Verfahrensschritte:
a) Generieren einer grafischen Useroberfläche an dem Computersystem;
b) Dynamische Ausgabe von Inhalten an der grafischen Useroberfläche;
c) Codieren von den dynamischen Funktionsumfang bestimmenden Transferinformationen, die zusammen mit der dynamischen Ausgabe von Inhalten an der grafischen Useroberfläche ausgegeben werden;
d) Erfassen der ausgegebenen Transferinformationen mit dem mobilen Kommunikationsgerät;
e) Auswerten der erfassten Transferinformationen durch das mobile Kommunikationsgerät und Bestimmen des dynamischen Funktionsumfangs; und
f) Aktivieren des dynamischen Funktionsumfangs auf dem mobilen Kommunikationsgerät unter Verwendung von Zugangsinformationen zu dem Computersystem und/oder zu den dynamisch auf der grafischen Useroberfläche ausgegebenen Inhalten, wobei diese Zugangsinformationen in den Transferinformationen umfasst sind.

2. Verfahren nach Anspruch 1,
dadurch gekennezeichnet, dass
der dynamische Funktionsumfang die Ausgabe zumindest von Teilen der an der grafischen Useroberfläche ausgegebenen Inhalte umfasst.

3. Verfahren nach Anspruch 1 oder 2,
dadurch gekennezeichnet, dass
der dynamische Funktionsumfang eine grafische Dateneingabeoberfläche generiert, mit der Dateneingaben in der grafischen Useroberfläche vorgenommen werden.

4. Verfahren nach einem der vorangehenden Ansprüche,
**dadurch gekennzeichnet, dass**
die Zugangsinformationen Daten zum Zugriff auf einen Server des Computersystems umfassen.

5. Verfahren nach einem der vorangehenden Ansprüche,
**dadurch gekennzeichnet, dass**
die Zugangsinformationen Daten umfassen, die bestimmte Teile der in der grafischen Useroberfläche ausgegebenen Inhalte definieren.
